# EUROPÄISCHE PATENTSCHRIFT

(11) **EP 2 807 310 B1**
(45) Veröffentlichungstag und Bekanntmachung des Hinweises auf die Patenterteilung: **20.04.2016**
(21) Anmeldenummer: 13701245.6
(22) Anmeldetag: 23.01.2013
(51) Int. Cl.: E03F 1/00

(54) **RIGOLENKÖRPERFLÄCHENEINHEIT**
DRAINAGE BODY SURFACE UNIT
UNITÉ DE SURFACE DE CORPS DE FOSSÉ FILTRANT

(30) Priorität: 24.01.2012 DE 102012100552
(43) Veröffentlichungstag der Anmeldung: 03.12.2014
(73) Patentinhaber: ACO Severin Ahlmann GmbH & Co. KG, 24782 Büdelsdorf (DE)
(72) Erfinder: MEINCKE, Arne, 24251 Osdorf (DE)
(74) Vertreter: Bohnenberger, Johannes
(86) Internationale Anmeldenummer: PCT/EP2013/051198
(87) Internationale Veröffentlichungsnummer: WO 2013/110635

(56) Entgegenhaltungen:
- WO-A1-2011/042415
- AU-B2- 454 536
- GB-A- 2 258 792

## Beschreibung

Die Erfindung betrifft eine Rigolenkörperflächeneinheit nach dem Oberbegriff des Patentanspruches 1.

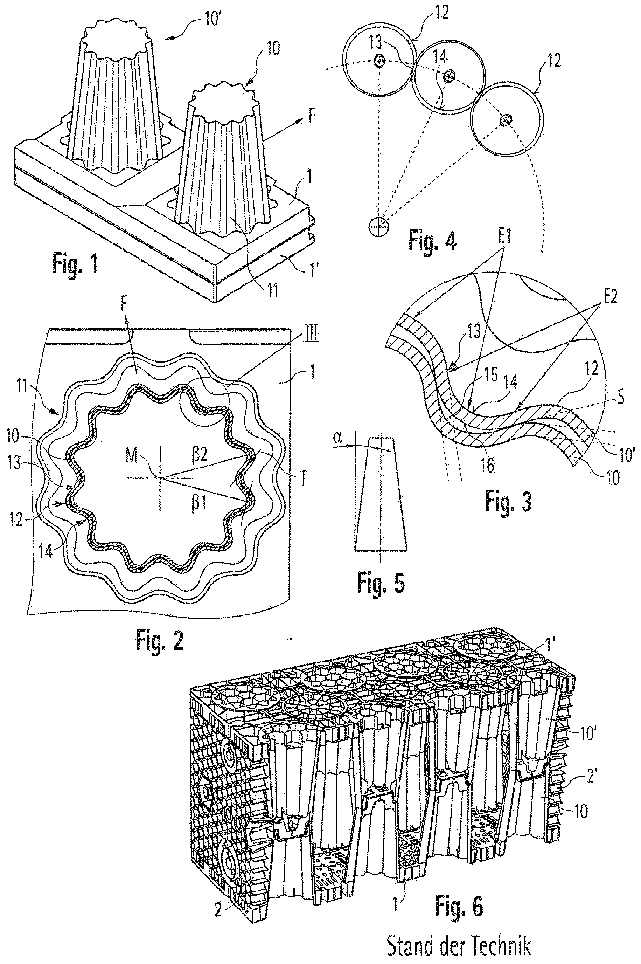

Aus der WO 2011/042415 A1 ist eine Rigole bekannt, deren Rigolenkörper aus zwei Rigolenkörperflächeneinheiten zusammengesetzt ist, wie dies in Fig. 6 gezeigt ist. Derartige Rigolenkörper werden in den Boden eingegraben und dienen zur Aufnahme von Wasser, welches dann in den Boden abgegeben werden soll. Derartige Rigolenkörper müssen somit relativ hohe Lasten aufnehmen können, da der Boden, unter welchem die Rigolenkörper eingebaut sind, befahren wird. In erster Linie sind diese Lasten Vertikallasten, jedoch treten auch seitlich auf den Rigolenkörper wirkende Lasten auf.

Die bekannten Rigolenkörperflächeneinheiten weisen Böden 1, 1' auf, von denen Abstandselemente 10, 10' hervorragen. Diese weisen konisch zulaufende Mantelflächen auf, welche bei der in der WO 2011/042415 A1 gezeigten Ausführungsform mit Sicken zur Versteifung bzw. Stabilisierung ausgestattet sind.

Derartige Rigolen sollen einerseits einen möglichst geringen Materialeinsatz fordern, was nicht nur die Kosten sondern auch den Transport und den Aufbau erleichtert. Andererseits sollen die fertig aufgebauten Rigolen eine möglichst hohe Stabilität aufweisen.

Der Erfindung liegt die Aufgabe zu Grunde, eine Rigolenkörperflächeneinheit der eingangs genannten Art dahingehend weiterzubilden, dass bei möglichst geringem Materialeinsatz eine verbesserte Stapelbarkeit und eine möglichst hohe Stabilität erzielt wird.

Diese Aufgabe wird durch die in Anspruch 1 erläuterte Rigolenkörperflächeneinheit gelöst.

Insbesondere wird diese Aufgabe durch eine Rigolenkörperflächeneinheit mit über einen Boden verbundenen und in einem Winkel α zur Senkrechten konischen Abstandselementen, die im Querschnitt wellenförmig verlaufende Mantelflächen aufweisen, welche aufeinanderfolgende Wellenberge und Wellentäler umfassen, dadurch gelöst, dass die Wellenberge über Übergangsbereiche in die Wellentäler übergehen, wobei die Übergangsbereiche eine geringere Materialstärke aufweisen als die Wellentäler.

Durch diese Konstruktion ist gewährleistet, dass einerseits eine möglichst hohe Stabilität bei geringem Materialeinsatz gewährleistet wird, da die Übergangsbereiche relativ wenig zur Stabilität gegenüber vertikalen Kräften beitragen. Andererseits wird die Stapelbarkeit, also das Volumen, das mehrere zur Lagerung oder zum Transport aufeinandergestapelte Rigolenkörperflächeneinheiten einnehmen, verringert.

Die Übergangsbereiche verbinden vorzugsweise die Wellenberge mit den Wellentälern über stetige, also knick- und sprungfreie Flächen. Dies ergibt die höchstmögliche Stabilität und bringt auch Vorteile bei der Spritzgussformung mit sich.

Die Wellenberge weisen vorzugsweise eine geringere Materialstärke als die Wellentäler auf. Überraschenderweise hat es sich gezeigt, dass dann, wenn die Wellentäler eine höhere Materialstärke als die Wellenberge aufweisen, beide ähnlich hohe Beiträge zur Knickstabilität der Abstandselemente aufweisen. Hierbei ist mit Knickstabilität die Stabilität gegenüber der Kraft bezeichnet, welche bei auf die Abstandselemente senkrechter Krafteinwirkung die Mantelfläche nach außen drückt.

Die Wellenberge und die Wellentäler sind vorzugsweise rohrabschnittsförmig mit kreisabschnittsförmiger Kontur in Umfangsrichtung ausgebildet. Diese Form ergibt einerseits eine besonders hohe Knicksteifigkeit, andererseits sind Konstruktion und Berechnung noch übersichtlich.

Die Abstandselemente sind vorzugsweise derart dimensioniert, dass bei gestapelten Rigolenkörperflächeneinheiten zwischen den Außenflächen der Abstandselemente eines unteren und den Innenflächen der Abstandselemente einer oberen Rigolenkörperflächeneinheit ein Spalt verbleibt. Dadurch wird gewährleistet, dass kein Verklemmen der konisch geformten Abstandselemente beim Stapeln auftritt. Es sei hier auch noch angemerkt, dass mit "ein Spalt verbleibt" nicht gemeint ist, dass sich die Außenflächen und die Innenflächen der Abstandselemente in keinem Fall berühren dürfen. Hiermit ist vielmehr gemeint, dass zwar Berührungspunkte (oder -linien) dieser Flächen existieren, jedoch kein vollständiges Anliegen der Flächen aufeinander stattfindet.

Vorzugsweise beträgt der Winkel α, der die Konizität der Abstandselemente bestimmt, 8 bis 12 Grad, vorzugsweise etwa 10 Grad. Dieser relativ spitze Winkel hat sich einerseits als vorteilhaft hinsichtlich der resultierenden Knickfestigkeit, also Widerstandsfähigkeit gegenüber vertikalen Lasten gezeigt, andererseits sind derartig geformte Abstandselemente bzw. die daraus aufgebauten Rigolenkörperflächeneinheiten noch gut ineinander stapelbar und somit gut lager- und transportierbar.

Die Abstandselemente weisen vorzugsweise eine Höhe von 500 bis 700 mm, vorzugsweise 550 bis 650 mm, insbesondere aber 600 bis 610 mm auf. Bei einer derartigen Dimensionierung ist mit vertretbarem Materialaufwand eine hinreichende Festigkeit gewährleistet.

Das Verhältnis der Materialstärke der Übergangsbereiche zu der Materialstärke der Wellenberge beträgt 0,3 bis 0,9, vorzugsweise 0,34 bis 0,82.

Nachfolgend wird die Erfindung anhand der beiliegenden Zeichnungen näher erläutert. Hierbei zeigen
- Fig. 1: eine perspektivische Darstellung eines Abschnittes einer Rigolenkörperflächeneinheit von zwei ineinander gestapelten Rigolenkörperflächeneinheiten,
- Fig. 2: einen schematisierten Horizontalschnitt durch eines der Abstandselemente nach Fig. 1,
- Fig. 3: eine vergrößerte Darstellung des Bereiches III aus Fig. 2,
- Fig. 4: eine Erläuterung der Grundkonstruktion der Mantelfläche,
- Fig. 5: eine stark schematisierte Darstellung eines Abstandselementes in Seitenansicht und
- Fig. 6: eine teilgeschnittene perspektivische Darstellung eines bekannten Rigolenkörpers.

In der nachfolgenden Beschreibung werden für gleiche und gleich wirkende Teile dieselben Bezugsziffern verwendet.

Wie aus den Fig. 1 bis 3 hervorgeht, umfassen die Rigolenkörperflächeneinheiten einen Boden 1, von welchem Abstandselemente 10, 10' hervorragen. Diese Abstandselemente 10, 10' weisen, wie dies insbesondere aus den Fig. 2 und 3 hervorgeht, eine Mantelfläche 11 auf, die wellenförmig gekrümmt ist und abwechselnd Wellenberge 12 und Wellentäler 14 aufweist. Als Wellenberge 12 werden also die Abschnitte bezeichnet, die von den Abstandselementen 10, 10' nach außen hervorragen und als Wellentäler 14 werden diejenigen Abschnitte bezeichnet, die in die Abstandselemente 10, 10' hineinragen.

Die Wellenberge 12 sind mit den Wellentälern 14 über Übergangsbereiche 13 verbunden.

Die Konizität wird gemäß Fig. 5 über einen Winkel α zur Senkrechten definiert, der bei dem hier gezeigten Ausführungsbeispiel 10 Grad beträgt.

Bei dem hier gezeigten Ausführungsbeispiel werden die Wellenberge 12 und Wellentäler 14 über "Rohrabschnitte" mit tangentialen Übergängen gebildet, die gleichmäßig auf dem Umfang eines Kreises angeordnet sind. Dies wird schematisiert auch in Fig. 4 gezeigt. Es werden also im Gegensatz zur bekannten Anordnung nach Fig. 6 keine Verstärkungsrippen auf der Innen- und Außenfläche angebracht, vielmehr werden die Konusflächen entsprechend geformt.
Bei vertikaler Belastung werden die Mantelflächen 11 der Abstandselemente 10, 10' auf Knickung nach außen mit einer Kraft F (siehe Fig. 1 und 2) belastet. Hierbei ist es von Vorteil, wenn man die Extrema, also die Wellenberge 12 und die Wellentäler 14 bezogen auf eine Mittelachse M der konischen Ausprägung mit einem relativ großen Querschnitt ausbildet. In anderen Worten: Je größer der Winkel β₁ der Tangente T des Kreisbogens zur Konusmittelachse M wird, desto mehr Querschnittsfläche E1 sollte zur Verfügung gestellt werden.

In den Übergangsbereichen 13 mit der Querschnittsfläche E2 zeigt die Tangente β₂ etwas mehr in Richtung auf die Mittelachse M und muss somit aufgrund der genannten Kräfteverhältnisse (Knickung) im Wesentlichen nur Schublasten übertragen. Dieser Übergangsbereich 13 wird mit einem geringeren Querschnitt, also dünner als die Bereiche der Wellenberge 12 und der Wellentäler 14 ausgebildet. Diese Übergangsbereiche sind auch noch einmal in Fig. 4 schematisiert so dargestellt, dass jeweils mit ihren Mittelpunkten gegeneinander verschobene, verschieden große Kreise abwechselnd die Wellentäler 14 und Wellenberge 12 bilden, welche über Übergangsbereiche 13 mit geringeren Querschnitten miteinander verbunden sind.

Weiterhin geht aus den Abbildungen, insbesondere aus Fig. 3 hervor, dass bei ineinandergesteckten Abstandselementen 10, 10' (zum Lagern und zum Transport) zwischen den Innenflächen 16 des "oberen" Abstandselements 10' und den Außenflächen 15 des "unteren" Abstandselements 10 ein Spalt S verbleibt, der allerdings nur so groß sein muss, dass keine Flächenpressung um den gesamten Umfang der Abstandselemente 10, 10' stattfindet, so dass sich die Abstandselemente 10, 10' leichter auseinander lösen lassen. Das Maß, wie weit ein Ineinanderstecken bzw. Aufeinanderstapeln von Rigolenkörperflächeneinheiten möglich ist, wird somit durch die Böden 1 definiert, von welchen die Abstandselemente 10, 10' hervorragen (siehe Fig. 1).

### Bezugszeichenliste

- 1, 1': Boden
- 10, 10': Abstandselement
- 11: Mantelfläche
- 12: Wellenberg
- 13: Übergangsbereich
- 14: Wellental
- 15: Außenfläche
- 16: Innenfläche

## Patentansprüche

1. Rigolenkörperflächeneinheit mit über einen Boden (1) verbundenen und in einem Winkel α zur Senkrechten konischen Abstandselementen (10, 10'), die im Querschnitt wellenförmig verlaufende Mantelflächen (11) aufweisen, welche aufeinanderfolgende Wellenberge (12) und Wellentäler (14) umfassen,
**dadurch gekennzeichnet, dass**
die Wellenberge (12) über Übergangsbereiche (13) in die Wellentäler (14) übergehen, wobei die Übergangsbereiche (13) eine geringere Materialstärke aufweisen als die Wellentäler (14).

2. Rigolenkörperflächeneinheit nach Anspruch 1,
**dadurch gekennzeichnet, dass**
die Übergangsbereiche (13) in einer stetigen, knick- und sprungfreien Fläche die Wellenberge (12) mit den Wellentälern (14) verbinden.

3. Rigolenkörperflächeneinheit nach einem der vorhergehenden Ansprüche,
**dadurch gekennzeichnet, dass**
die Wellenberge (13) eine geringere Materialstärke als die Wellentäler (14) aufweisen.

4. Rigolenkörperflächeneinheit nach einem der vorhergehenden Ansprüche,
**dadurch gekennzeichnet, dass**
die Wellenberge (12) und die Wellentäler (14) rohrabschnittsförmig mit kreisabschnittsförmiger Kontur in Umfangsrichtung ausgebildet sind.

5. Rigolenkörperflächeneinheit nach einem der vorhergehenden Ansprüche,
**dadurch gekennzeichnet, dass**
die Abstandselemente (10, 10') derart dimensioniert sind, dass bei gestapelten Rigolenkörperflächenelementen zwischen den Außenflächen (15) der Abstandselemente (10) eines unteren und der Innenfläche (16) der Abstandselemente (10') eines oberen Rigolenkörperflächenelements ein Spalt (S) verbleibt.

6. Rigolenkörperflächeneinheit nach einem der vorhergehenden Ansprüche,
**dadurch gekennzeichnet, dass**
dass der Winkel α 8 bis 12 Grad, vorzugsweise 10 Grad beträgt.

7. Rigolenkörperflächeneinheit nach einem der vorhergehenden Ansprüche,
**dadurch gekennzeichnet, dass**
die Abstandselemente (10, 10') eine Höhe von 500 bis 700 mm, vorzugsweise 550 bis 650 mm, vorzugsweise 600 bis 610 mm aufweisen.

8. Rigolenkörperflächeneinheit nach einem der vorhergehenden Ansprüche,
**dadurch gekennzeichnet, dass**
das Verhältnis der Materialstärke der Übergangsbereiche zu der Materialstärke der Wellenberge 0,3 bis 0,9, vorzugsweise 0,34 bis 0,82 beträgt.

## Claims

1. Drainage body surface unit having spacer elements (10, 10') connected via a bottom (1) and conical at an angle α to the vertical which exhibit lateral surfaces (11) extending in a wave-shape as seen in cross-section, which comprise successive wave crests (12) and wave troughs (14),
**characterized in that**
the wave crests (12) merge into the wave troughs (14) via transition areas (13), wherein the transition areas (13) have a lower material thickness than the wave troughs (14).

2. Drainage body surface unit according to claim 1,
**characterized in that**
the transition areas (13) connect the wave crests (12) with the wave troughs (14) in a continuous plane free of kinks and steps.

3. Drainage body surface unit according to any of the preceding claims,
**characterized in that**
the wave crests (13) have a lower material thickness than the wave troughs (14).

4. Drainage body surface unit according to any one of the preceding claims,
**characterized in that**
the wave crests (12) and wave troughs (14) are formed to be pipe section-shaped having a circle segment-shaped contour in the circumferential direction.

5. Drainage body surface unit according to any one of the preceding claims,
**characterized in that**
the spacer elements (10, 10') are dimensioned such that, when drainage body surface elements are stacked, a gap (S) is left between the outer surfaces (15) of the spacer elements (10) of a lower drainage body surface element and the inner surface (16) of the spacer elements (10') of an upper drainage body surface element.

6. Drainage body surface unit according to any one of the preceding claims,
**characterized in that**
the angle α is 8 to 12 degrees, preferentially 10 degrees.

7. Drainage body surface unit according to any one of the preceding claims,
**characterized in that**
the spacer elements (10, 10') have a height of 500 to 700 mm, preferentially 550 to 650 mm, preferentially 600 to 610 mm.

8. Drainage body surface unit according to any one of the preceding claims,
**characterized in that**
the ratio of the transition areas' material thickness to the wave crests' material thickness is 0.3 to 0.9, preferentially 0.34 to 0.82.

## Revendications

1. Unité surfacique formant corps de rigole comprenant des éléments d'écartement (10, 10') reliés via un fond (1) et coniques sous un angle α par rapport à la verticale,
qui présentent des surfaces enveloppe (11) en forme ondulée en section transversale qui incluent des sommets d'ondulations (12) et des vallées d'ondulations (14) qui se succèdent,
**caractérisée en ce que**
les sommets d'ondulations (12) se transforment dans les vallées d'ondulations (14) via des zones de transition (13), telles que les zones de transition (13) présentent une épaisseur de matériau plus faible que les vallées d'ondulations (14).

2. Unité surfacique formant corps de rigole selon la revendication 1, **caractérisée en ce que** les zones de transition (13) relient les sommets d'ondulations (12) avec les vallées d'ondulations dans une surface continue dépourvue de cassures et de ressauts.

3. Unité surfacique formant corps de rigole selon l'une des revendications précédentes,
**caractérisée en ce que** les sommets d'ondulations présentent une épaisseur de matériau plus faible que les vallées d'ondulations (14).

4. Unité surfacique formant corps de rigole selon l'une des revendications précédentes,
**caractérisée en ce que** les sommets d'ondulations (12) et les vallées d'ondulations (14) sont réalisés sous forme de tronçons tubulaires avec un contour en forme de portion de cercle en direction périphérique.

5. Unité surfacique formant corps de rigole selon l'une des revendications précédentes,
**caractérisée en ce que** les éléments d'écartement (10, 10') ont des dimensions telles que lorsque que les éléments surfaciques formant corps de rigole sont empilés il demeure une fente (S) entre les surfaces extérieures (15) des éléments d'écartement (10) d'un élément surfacique formant corps de rigole inférieur et la surface intérieure (16) des éléments d'écartement (10') d'un élément surfacique formant corps de rigole supérieur.

6. Unité surfacique formant corps de rigole selon l'une des revendications précédentes,
**caractérisée en ce que** l'angle α est de 8 à 12°, de préférence 10°.

7. Unité surfacique formant corps de rigole selon l'une des revendications précédentes,
**caractérisée en ce que** les éléments d'écartement (10, 10') ont une hauteur de 500 à 700 mm, de préférence de 550 à 650 mm, de préférence de 600 à 610 mm.

8. Unité surfacique formant corps de rigole selon l'une des revendications précédentes,
**caractérisée en ce que** le rapport de l'épaisseur de matériau des zones de transition sur l'épaisseur de matériau des sommets d'ondulations est de 0,3 à 0,9, de préférence de 0,34 à 0,82.
